# EUROPEAN PATENT SPECIFICATION

(11) **EP 0 976 942 B1**
(45) Date of publication and mention of the grant of the patent: **30.03.2005**
(21) Application number: 99114524.4
(22) Date of filing: 23.07.1999
(51) Int. Cl.: F16D 23/06

(54) **A synchronised clutch for the gearbox of a vehicle**
Sychronisierte Kupplung für ein Fahrzeuggetriebe
Embrayage synchronisé pour la boîte de vitesse d'une véhicule

(30) Priority: 31.07.1998 IT TO980672
(43) Date of publication of application: 02.02.2000
(73) Proprietor: IVECO S.p.A., 10156 Torino (IT)
(72) Inventor: Pigozzi, Gian Maria, 25100 Brescia (IT)
(74) Representative: Gerli, Paolo

(56) References cited:
- EP-A- 0 272 103
- DE-A- 3 803 845
- DE-A- 4 224 270
- DE-B- 2 659 448
- US-A- 2 342 960
- US-A- 2 369 369
- US-A- 2 916 939
- US-A- 4 727 968

## Description

The present invention relates to a synchronised coupling for the gearbox of a vehicle.

In gearboxes for vehicles it is known to use a synchronised coupling to connect angularly an idle gearwheel to a respective shaft. Typically, a coupling is interposed between two gearwheels and is able to connect the gearwheels themselves selectively to the shaft.

Synchronised couplings are known which comprise a hub keyed on to the shaft, a pair of drive elements disposed on axially opposite sides with respect to the hub, which are angularly secured to a respective gearwheel and are provided with respective outer toothings, and a motion-transmitting device interposed between the hub and the drive elements so as to actuate selectively the drive elements themselves.

Normally, the motion-transmitting device comprises a pair of synchronising rings each interposed axially between the hub and the respective drive element. The synchronising rings have respective conical friction surfaces adapted to co-operate, in operation, with corresponding conjugate friction surfaces of the respective drive elements, and they are provided with respective outer toothings.

Finally, the transmission device comprises a selection sleeve which is angularly secured to the hub by means of inner toothing thereof and which can move axially on opposite sides of said hub so as to carry out respective coupling travel. During each coupling travel said inner toothing of the sleeve firstly engages the outer toothing of the synchronising ring and then the outer toothing of the drive element, when the relative speed of the latter with respect to the synchronising ring is reduced to zero as a result of the frictional contact between the respective conjugate friction surfaces.

Although they are widely used, known synchronised couplings of the above-mentioned type have the drawback of requiring a relatively long coupling time and axial forces which are variable and, in some cases, relatively high especially during the final phases of the coupling travel.

In particular, this can be attributed to the possible sticking of the sleeve with respect to the relevant drive element during the phase of angular alignment of the respective toothings. In fact, the teeth of these toothings are normally provided with tapered axial ends having inclined flanks so as to facilitate mating and, therefore, alignment. The powerful forces acting tangentially on the drive element in the direction opposite to its speed of rotation, depending on the flank of the teeth on which contact occurs during mating, may be favourable or opposed thereto, thereby occasionally creating variable operating forces. In an unfavourable case, these powerful forces result in an increase in the axial operating force. Moreover, in known synchronised couplings the phenomenon known as "double release" occurs, or during each coupling travel there is a reduction in the axial load at the end of the alignment between the toothing of the sleeve and the toothing of the synchronising ring, and then an increase in the load itself as a result of the successive alignment between the toothing of the sleeve itself and the toothing of the drive element.

US 2,916,939 describes a syncronised coupling having a sleeve and a gear, the first having inner teeth of four different lengths, the second outer teeth having two different tenghts.

The object of the present invention is to devise a synchronised coupling for the gearbox of a vehicle, which makes it possible to resolve the above-mentioned problems in a simple and economic manner.

According to the present invention there is provided a synchronised coupling for the gearbox of a vehicle, comprising a shaft and at least one gearwheel which is coaxial with respect to the shaft itself and idle with respect thereto, the coupling comprising a hub securely keyed on to said shaft, drive means interposed between said gearwheel and said hub, said drive means being secured to said gearwheel and comprising a conical friction surface and an external spur gear, at least one synchronising ring interposed between said hub and said drive means and comprising a conical friction surface conjugate with the conical friction surface of said drive means and an external spur gear, and a selection sleeve which is angularly secured and axially free with respect to said hub and having an internal spur gear adapted to engage the toothings of said synchronising ring and of said drive means, the toothings of said selection sleeve and of said drive means each having a first and second plurality of teeth, the teeth of said first plurality of teeth being axially projecting with respect to the teeth of said second plurality of teet, characterised in that each said first tooth has at least one end portion bounded by a pair of flanks and by a front cut-off surface said flanks being mutually convergent from said front cut-off surface.

The invention will now be described with reference tothe accompanying drawings which illustrate a non-restrictive example of embodiment thereof, in which:
Figure 1 illustrates a section of a preferred form of embodiment of a synchronised coupling for the gearbox of a vehicle, in accordance with the present invention, connected with a shaft and a pair of gearwheels of a gearbox.
Figure 2 is view in radial direction, on an enlarged scale and with parts omitted for greater clarity, of one sector of the synchronised coupling during an intermediate phase of the coupling operation, and
Figure 3 is analogous to Figure 2, which illustrates the synchronised coupling at the end of the coupling operation.

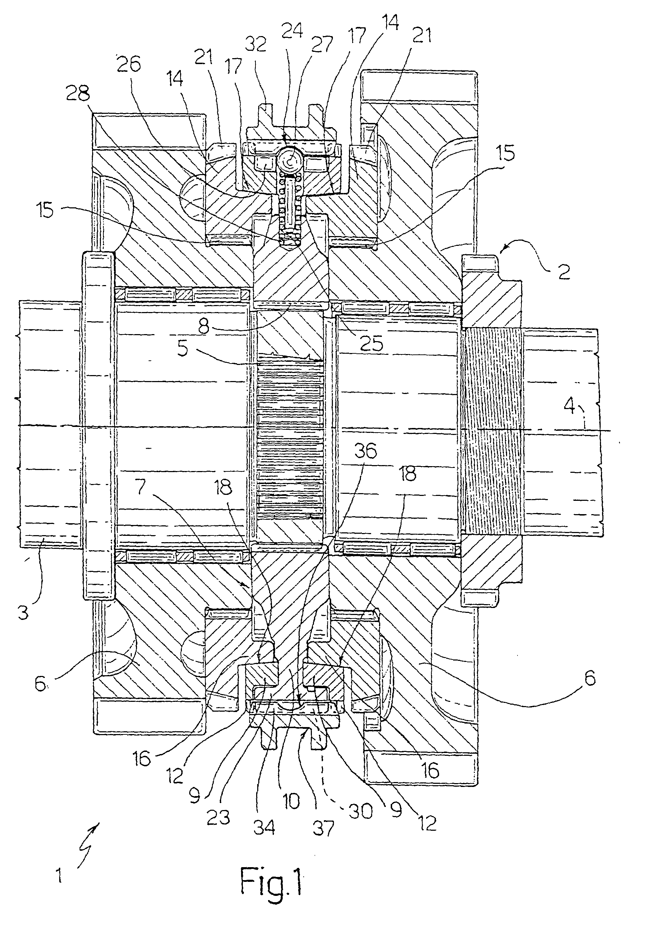

In Figure 1 the reference numeral 1 denotes a synchronised coupling forming part of a gearbox 2 (partly illustrated) of a vehicle (not shown).

The gearbox 2 comprises a shaft 3, an axis of which is indicated by the reference numeral 4 and which has a splined intermediate portion 5, and a pair of gearwheels 6 mounted angularly idle and secured axially on the shaft 3, on opposite sides of the intermediate portion 5.

The synchronised coupling 1 comprises a hub 7 of known type, which is keyed on to the splined intermediate portion 5 of the shaft 3 by means of a corresponding annular splined inner portion 8. The coupling 1 further comprises two synchronising rings 9, also of known type, arranged on axially opposite sides of the hub 7 and each facing an annular intermediate tapered portion 10 of the hub 7 itself.

The rings 9 are each provided with an inner conical friction surface 18. The coupling 1 further comprises two drive flanges 14 arranged coaxially to the shaft 3 on opposite sides of the hub 7 and each interposed between the respective synchronising ring 9 and the respective gearwheel 6. Each flange 14 is keyed, in known manner, by means of a splined coupling 15 on the respective gearwheel 6 and also has an annular portion 16 which extends axially towards the hub 7 inside the respective synchronising ring 9 and which has, in turn, an outer conical friction surface 17 co-operating, in operation, with the corresponding inner conical friction surface 18 of the respective synchronising ring 9.

Finally, the rings 9 and the flanges 14 have respective external spur gears 12,21.

The hub 7 has an outer annular ring gear 23 which comprises a plurality of actuating devices 24 which are angularly equidistant (only one of which is shown in Figure 1). Each device 24 comprises a respective radial milling 25 which is provided along the annular ring gear 23 of the hub 7 and across the entire tapered portion 10. Each device 24 further comprises a ball 27 adapted to slide in the milling 25 and facing a pair of shoulders 26 arranged axially on opposite sides of the ball 27 itself and each forming part of the respective ring 9, and a helical spring 28 disposed in the milling 25 and acting on the ball 27 in a radially outward direction.

Finally, the outer annular ring gear 23 of the hub 7 comprises an external spur gear 30, on which is mounted to slide a selection sleeve 32 provided with a corresponding internal spur gear 34.

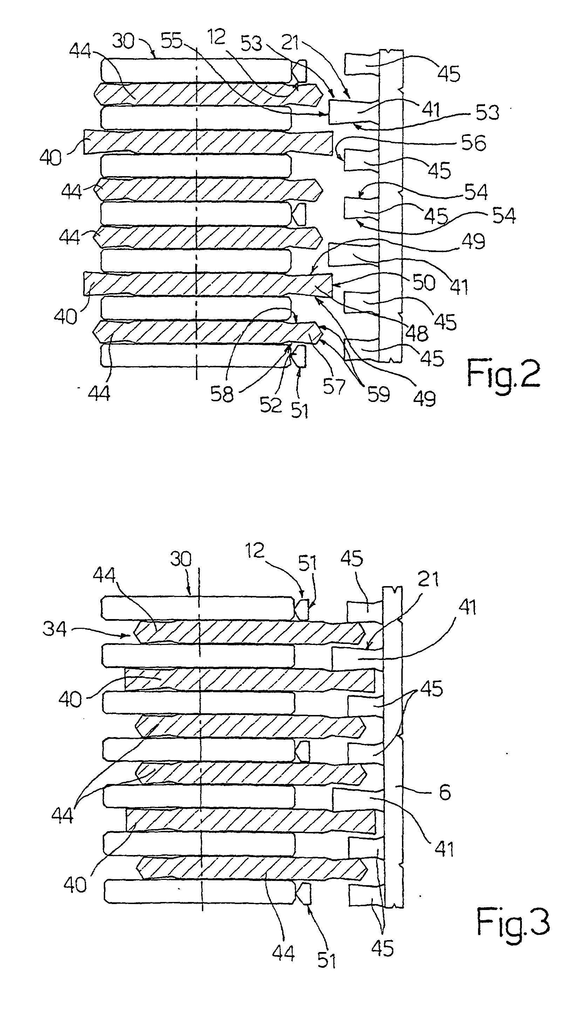

The selection sleeve 32 is angularly secured to the hub 7 and can slide axially between an intermediate rest or "neutral" position, in which the gear 34 engages both the gear 30 of the hub 7 and the gear 12 of both the synchronising rings 9, and two possible axially operative positions on opposite sides of the rest position, in which the gear 34 engages both the gear 30 of the hub 7 and the gears 12 and 21 of a synchronising ring 9 and of the respective drive flange 14. An annular stop groove 36 is provided in the internal gear 34 of the sleeve 32, said groove 36 being adapted to being engage partially by the balls 27 when the sleeve 32 is in the neutral position. Finally, the sleeve 32 comprises an outer annular track 37 adapted to be engaged by a mechanical control member (not shown), for example of fork type, for the displacement of the sleeve 32 in the respective operating positions.
Referring now to Figures 2 and 3, the gear 34 of thesleeve 32 comprises a first plurality of teeth 40 and a second plurality of teeth 44. The teeth 40 project axially with respect to the teeth 44, angularly equidistant from one another, and spaced apart by a pair of teeth 44.
Each tooth 40 also has a pair of end portions 42 bounded laterally by two respective flanks 49 and by a respective surface 50 cut off at the end perpendicular to the axis 4 and of a width equal to the thickness of the tooth 40; the flanks 49 are inclined and mutually convergent from the surface 50 towards the inside of the tooth 40.

The teeth 40 are each provided with a pair of respective end portions 57 bounded by respective flanks 58 and by two respective pointed surfaces 59 converging to a sharp edge in alignment with the longitudinal centre line of the tooth 44. The flanks 58 are inclined and mutually convergent from respective opposing edges of the surfaces 59, which have a respective distance apart equal to the thickness of the tooth 44.

Analogously, the gear 21 of each flange 14 comprises a first plurality of teeth 41 and a second plurality of teeth 45. The teeth 41 are of greater axial length than the teeth 45 and project with respect thereto towards the respective synchronising ring 9. The teeth 41 are angularly equidistant from one another and are spaced apart by a pair of teeth 45.

The teeth 41 and the teeth 45 are bounded by respective pairs of flanks 53,54 and by respective cut-off surfaces 55,56. The surfaces 55,56 are of equal width to one another and equal to the width of the teeth 40,44 of the sleeve 32.

The flanks 53 or 54 of each tooth 41 or 45 are mutually convergent from the respective cut-off surface 55 or 56.

The gear 12 of each ring 9 has a smaller number of teeth 51 than that of the teeth of the gears 21,30,34. The teeth 51 have respective axial portions 42 facing the hub 7 and tapered to a point.

In operation, during axial displacement of the sleeve 32 from the neutral position shown in Figure 1, each ball 27 receives from the annular groove 36 an axial thrust which it transmits to one of the two shoulders 26, thereby actuating the respective synchronising ring 9, and it slides towards the interior of the respective milling 25 counter to the action of the respective spring 28. The gear 34 of the sleeve 32 is fully disengaged from the gear 12 of the inoperative ring 9 and the friction surface 18 of the operative ring 9 starts to co-operate frictionally with the friction surface 17 of the respective flange 14, thereby reducing to zero the respective speed between the flange 14 and the ring 9.

As a result of the respective drive action between the ring 9 itself and the flange 14, the gear 12 of the operative ring 9 is out of alignment with respect to the gear 34 of the sleeve 32, thereby preventing its forward movement directed towards the flange 14 until reaching the synchronised condition.

After this actuation and synchronisation phase, there follows a phase of realignment between the gear 34 of the sleeve 32 and the gear 12 of the operative synchronising ring 9, i.e. of variation of the respective angular position so as to bring the teeth 51 of the ring 9 in alignment with the spaces between the teeth 40,44 of the sleeve 32 and thereby allow the subsequent axial sliding of the sleeve 32.
The realignment brings about the partial loss of synchronisation with the respective flange 14; with particular reference to Figure 2, the axially projecting teeth 40 of the sleeve 32 have a high probability of being inserted into the spaces between the corresponding axially projecting teeth 41 of the flange 14 and, since there is a residual speed between the gears 21 and 34, the flanks 49 of the tooth 40 come into tangential contact with the corresponding flanks 53 of the teeth 41. With further reference to Figures 2 and 3, the inclined profile of the flanks 49,53 and of the flanks 58,54 determines an axial load component which then assists the coupling of the gears 34 and 21 until full engagement (Figure 3).

In the case in which the axially projecting teeth 40 of the sleeve 32 are axially aligned with the corresponding axially projecting teeth 41 of the flange 14, the respective residual angular speed makes possible an immediate return in the case described above.

Furthermore, the friction surfaces 17 and 18 are tapered to a greater extent with respect to the friction angle, with a difference between the two quantities being greater than or equal to a given threshold value depending on the different and specific operating conditions so as to make possible the partial loss of synchronisation during the realignment between the gear 34 and the gear 12.

It is evident from the foregoing that the synchronised coupling 1 described can be engaged very easily, gradually and rapidly because the phase of aligning the gear 34 of the sleeve 32 with the gear 21 of the respective 14 takes place automatically as a result of the tangential engagement between the axially projecting teeth 40,41 of the sleeve 32 and the flange 14, thereby reducing the actuating forces and eliminating the variations in axial load. Moreover, the special profile of the flanks 49,53 and of the flanks 58,54 is such that it subsequently facilitates the coupling of the transmission in that it makes it possible to utilise positively the powerful forces acting on the flange 14 so as to engage the gears 34 and 21 without subsequent stresses being exerted.

Finally, it is evident from the foregoing that the synchronised coupling 1 described can be subject to modifications and variations which do not depart from the scope of protection of the present invention. In particular, the teeth 40 and 41 could be fewer in number than the teeth 44 and, respectively, 45 and generally the gears 34 and 21 could be of different profile to that described by way of example but adapted to facilitate the engagement of said gears 34 and 21. Finally, the gear 21 and the friction surface 17 could be formed directly on the gearwheels 6 without the interposition of the flanges 14.

## Claims

1. A synchronised coupling (1) for the gearbox (2) of a vehicle, comprising a shaft (3) and at least one gearwheel (6) which is coaxial with respect to the shaft (3) itself and idle with respect thereto, the coupling (1) comprising a hub (7) securely keyed on to said shaft (3), drive means (14) interposed between said gearwheel (6) and said hub (7), said drive means (14) being secured to said gearwheel (6) and comprising a conical friction surface (17) and an external spur gear, at least one synchronising ring (9) interposed between said hub (7) and said drive means (14) and comprising a conical friction surface (18) conjugate with the conical friction surface (17) of said drive means (14) and an external spur gear (12), and a selection sleeve (32) which is angularly secured and axially free with respect to said hub (7) and having an internal spur gear (34) adapted to engage the gears (12,21) of said synchronising ring (9) and of said drive means (14), the gears (34,21) of said selection sleeve (32) and of said drive means (14) each having at least one first tooth (40,41) and a plurality of second teeth (44,45), said first tooth (40,41) being axially projecting with respect to said plurality of second teeth (44,45), **characterised in that** each said first tooth (40,41) has at least one end portion (48,41) bounded by a pair of flanks (49,53) and by a front cut-off surface (50,55), said flanks (49,43) being mutually convergent from said front cut-off surface (50,55).

2. A synchronised coupling according to claim 1,**characterised in that** the gears (34,21) of said selection sleeve (32) and of said drive means (14) each have a plurality of said first teeth (40,41).

3. A synchronised coupling according to claim 1, **characterised in that** said second teeth (45) of the gear (21) of said drive means (14) each have at least one end portion (45) bounded by a pair of flanks (54) and by a front cut-off surface (56), said flanks (54) being mutually convergent from said front cut-off surface (56).

4. A synchronised coupling according to claim 3, **characterised in that** said second teeth (44) of the gear (34) of said selection sleeve (32) each have at least one end portion (57) bounded by a pair of flanks (58) and a pair of pointed front surfaces (59) converging to a sharp edge in alignment with the longitudinal centre line of the tooth (44), said flanks (58) being mutually convergent from said pointed front surfaces (59).

5. A synchronised coupling according to any one of the preceding claims, **characterised in that** said conical friction surface (17) of said drive means (14) and said conical friction surface (18) of said synchronising ring (9) are tapered to a greater extent than a given threshold value with respect to the friction angle, so that partial loss of syncronisation is possible during the realignment between the internal gear (34) of the sleeve (32) and the gear (12) of the syncronising ring (9).

## Patentansprüche

1. Synchronisierte Kupplung (1) für das Getriebe (2) eines Fahrzeuges, welche eine Welle (3) und mindestens ein Zahnrad (6) umfasst, welches in Bezug auf die Welle (3) selbst koaxial angeordnet ist und diesbezüglich frei beweglich ist, wobei die Kupplung (1) umfasst: eine auf der genannten Welle (3) fest verkeilte Nabe (7), zwischen dem genannten Zahnrad (6) und der genannten Nabe (7) befindliche Antriebsmittel (14), wobei diese Antriebsmittel (14) am genannten Zahnrad (6) befestigt sind und eine konische Reibungsfläche (17) und eine äußere Geradverzahnung umfassen, mindestens einen Synchronisierring (9), welcher sich zwischen der . genannten Nabe (7) und dem genannten Antriebsmittel (14) befindet und eine zur konischen Reibungsfläche (17) der genannten Antriebsmittel (14) passende konische Reibungsfläche (18) und eine äußere Geradverzahnung (12) umfasst, und eine Selektionsmuffe (32), welche abgewinkelt befestigt ist und in axialer Richtung in Bezug auf die genannte Nabe (7) frei beweglich ist und eine innere Geradverzahnung (34) aufweist, welche so ausgelegt ist, dass sie in die Zahnräder (12, 21) des genannten Synchronisierringes (9) und der genannten Antriebsmittel (14) eingreift, wobei jedes der Zahnräder (34,21) der genannten Selektionsmuffe (32) und der genannten Antriebsmittel (14) mindestens einen ersten Zahn (40, 41) und eine Anzahl von zweiten Zähnen (44, 45) aufweist, wobei der genannte erste Zahn (40, 41) in axialer Richtung in Bezug auf die genannte Anzahl der zweiten Zähne (44, 45) hervorsteht, **dadurch gekennzeichnet; dass** jeder genannte erste Zahn (40, 41) mindestens einen Endbereich (48, 41) aufweist, welcher durch ein Flankenpaar (49, 53) und durch eine stirnseitige Abtrennfläche (50, 55) begrenzt ist, wobei die genannten Flanken (49, 43) von der genannten stirnseitigen Abtrennfläche (50, 55) aus konvergent aufeinander zu verlaufen.

2. Synchronisierte Kupplung gemäß Anspruch 1,
**dadurch gekennzeichnet, dass** jedes der Zahnräder (34, 21) der genannten Selektionsmuffe (32) und der genannten Antriebsmittel (14) eine gewisse Anzahl der genannten ersten Zähne (40,41) aufweist.

3. Synchronisierte Kupplung gemäß Anspruch 1,
**dadurch gekennzeichnet, dass** jeder der genannten zweiten Zähne (45) des Zahnrades (21) der genannten Antriebsmittel (14) mindestens einen Endbereich (45) aufweist, welcher durch ein Flankenpaar (54) und durch eine stirnseitige Abtrennfläche (56) begrenzt ist, wobei die genannten Flanken (54) von der genannten stirnseitigen Abtrennfläche (56) aus konvergent aufeinander zu verlaufen.

4. Synchronisierte Kupplung gemäß Anspruch 3,
**dadurch gekennzeichnet, dass** jeder der genannten zweiten Zähne (44) des Zahnrades (34) der Selektionsmuffe (32) mindestens einen Endbereich (57) aufweist, welcher durch ein Flankenpaar (58) und durch ein Paar von zugespitzt verlaufenden vorderen Flächen (59) begrenzt wird, welche zu einer scharfen Kante hin verlaufen, die sich in Ausrichtung mit der in Längsrichtung verlaufenden Mittellinie des Zahnes (44) befindet, wobei die genannten Flanken (58) von den genannten spitz zulaufenden Vorderflächen (59) aus konvergent aufeinander zu verlaufen.

5. Synchronisierte Kupplung gemäß einem der vorherigen Ansprüche,
**dadurch gekennzeichnet, dass** die genannte konische Reibungsfläche (17) der genannten Antriebsmittel (14) und die genannte konische Reibungsfläche (18) des genannten Synchronisiemnges (9) sich in Bezug auf den Reibungswinkel stärker verjüngen als ein vorgegebener Schwellenwert, so dass ein teilweiser Verlust an Synchronisation während der Wiederausrichtung zwischen dem inneren Zahnrad (34) der Muffe (32) und dem Zahnrad (12) des Synchronisierringes ((9) möglich ist.

## Revendications

1. Embrayage synchronisé (1) pour la boite de vitesses (2) d'un véhicule, comprenant un arbre (3) et au moins une roue dentée (6) qui est coaxiale par rapport à l'arbre (3) lui-même et libre par rapport à celui-ci, l'embrayage (1) comprenant un moyeu (7) claveté solidement sur ledit arbre (3), un moyen d'entraînement (14) interposé entre ladite roue dentée (6) et ledit moyeu (7), ledit moyen d'entraînement (4) étant fixé à ladite roue dentée (6) et comprenant une surface de friction conique (17) et un engrenage droit externe, au moins une bague de synchronisation (9) interposée entre ledit moyeu (7) et ledit moyen d'entraînement (14) et comprenant une surface de friction conique (18) unie avec la surface de friction conique (17) dudit moyen d'entraînement (14) et un engrenage droit externe (12), et un manchon de sélection (32) qui est fixé angulairement et axialement libre par rapport audit moyen (7) et comprenant un engrenage droit interne (34) apte à venir en prise avec les roues dentées (12,21) de ladite bague de synchronisation (9) et dudit moyen d'entraînement (14), les roues dentées (34,21) dudit manchon de sélection (32) et dudit moyen d'entraînement (14) ayant chacune au moins une première dent (40,41) et plusieurs secondes dents (44,45), ladite première dent (40,41) faisant saillie axialement par rapport à ladite pluralité de secondes dents (44,45), **caractérisé en ce que** chacune desdites premières dents (40,41) possède au moins une portion d'extrémité (48,41) délimitée par une paire de flancs (49,53) et par une surface de coupure frontale (50,55), lesdits flancs (49,43) convergeant mutuellement à partir de ladite surface de coupure frontale (50,55).

2. Embrayage synchronisé selon la revendication 1, **caractérisé en ce que** les roues dentées (34,21) dudit manchon de sélection (32) et dudit moyen d'entraînement (14) possèdent chacune une pluralité desdites premières dents (40,41).

3. Embrayage synchronisé selon la revendication 1, **caractérisé en ce que** lesdites secondes dents (45) de la roue dentée (21) dudit moyen d'entraînement (14) ont chacune au moins une portion d'extrémité (45) délimitée par une paire de flancs (54) et par une surface de coupure frontale (56), lesdits flancs (54) convergeant mutuellement depuis ladite surface de coupure frontale (56).

4. Embrayage synchronisé selon la revendication 3, **caractérisé en ce que** lesdites secondes dents (44) de la roue dentée (34) dudit manchon de sélection (32) ont chacune au moins une portion d'extrémité (57) délimitée par une paire de flancs (58) et une paire de surfaces frontales pointues (59) convergent en un bord tranchant en alignement avec la ligne centrale longitudinale de la dent (44), lesdits flancs (58) convergeant mutuellement depuis lesdites surfaces frontales pointues (59).

5. Embrayage synchronisé selon l'une des revendications précédentes, **caractérisé en ce que** ladite surface de friction conique (17) dudit moyen d'entraînement (14) et ladite surface de friction conique (18) de ladite bague de synchronisation (9) sont diminuées dans une plus grande mesure qu'une valeur de seuil donnée par rapport à l'angle de friction de sorte qu'une perte partielle de synchronisation est possible pendant le réalignement entre la roue dentée interne (34) du manchon (32) et la roue dentée (12) de la bague de synchronisation (9).
